# FASCICULE DE BREVET EUROPEEN

(11) **EP 3 493 182 B1**
(45) Date de publication et mention de la délivrance du brevet: **21.04.2021**
(21) Numéro de dépôt: 18204710.0
(22) Date de dépôt: 06.11.2018
(51) Int. Cl.: G09C 1/00, H04L 9/00, H04L 9/32

(54) **PROCÉDÉ ET DISPOSITIF DE TRAITEMENT CRYPTOGRAPHIQUE DE DONNÉES**
VERFAHREN UND VORRICHTUNG ZUR KRYPTOGRAPHISCHEN DATENVERARBEITUNG
METHOD AND DEVICE FOR CRYPTOGRAPHIC PROCESSING OF DATA

(30) Priorité: 30.11.2017 FR 1761459
(43) Date de publication de la demande: 05.06.2019
(73) Titulaire: IDEMIA France, 92400 Courbevoie (FR)
(72) Inventeur: RONDEPIERRE, Franck, 92400 Courbevoie (FR); BETTALE, Luk, 92400 Courbevoie (FR)
(74) Mandataire: Jacobacci Coralis Harle

(56) Documents cités:
- WO-A1-2017/080769
- FR-A1- 2 867 635
- FR-A1- 2 985 624
- FR-A1- 2 986 092
- WU K ET AL: "Concurrent error detection of fault-based side-channel cryptanalysis of 128-bit RC6 block cipher", MICROELECTRONICS JOUR, MACKINTOSH PUBLICATIONS LTD. LUTON, GB, vol. 34, no. 1, 1 janvier 2003 (2003-01-01), pages 31-39, XP004404368, ISSN: 0026-2692, DOI: 10.1016/S0026-2692(02)00126-X

## Description

### DOMAINE TECHNIQUE AUQUEL SE RAPPORTE L'INVENTION

La présente invention concerne de manière générale le domaine du traitement cryptographique de données.

Elle concerne plus particulièrement un procédé et un dispositif de traitement cryptographique de données.

### ARRIERE-PLAN TECHNOLOGIQUE

On cherche à protéger le traitement cryptographique de données contre des attaques qui viseraient à révéler les secrets (en général une clé cryptographique) utilisés au cours de ce traitement cryptographique et ainsi à utiliser frauduleusement ces secrets.

Il a déjà été prévu dans ce but de concevoir les algorithmes cryptographiques qui manipulent les données de façon à éviter toute fuite d'informations liées aux données manipulées.

Dans certaines situations toutefois, la conception des algorithmes cryptographiques est figée, comme c'est le cas lorsqu'on utilise un circuit électronique dédié (programmé de manière fixe) pour la mise en œuvre de ces algorithmes cryptographiques.

Dans ce type de situation, les mesures suivantes sont généralement prévues pour la protection contre les attaques :
- d'une part, la mise en œuvre utile de l'algorithme cryptographique est noyée parmi plusieurs mises en œuvre factices de cet algorithme cryptographique (voir par exemple WO2017/080769 qui divulgue également d'utiliser des transformations inverses des transformations factices et FR2985624) ;
- d'autre part, on vérifie l'absence de faute dans le traitement, de préférence en cherchant à retrouver les données initiales par application d'un algorithme inverse (voir par exemple FR2986092 ou WU K. ET AL: "Concurrent error détection of fault-based side-channel cryptanalysis of 128-bit RC6 block cipher",MICROELECTRONICS JOUR, MACKINTOSH PUBLICATIONS LTD. LUTON, GB, vol. 34, no. 1, 1 janvier 2003 (2003-01-01), pages 31-39, ISSN: 0026-2692, DOI: 10.1016/S0026-2692(02)00126-X).

### OBJET DE L'INVENTION

Dans ce contexte, la présente invention propose un procédé de traitement cryptographique de premières données, comprenant les étapes suivantes :
- mémorisation d'une valeur initiale en tant que valeur courante ;
- mise en œuvre d'un nombre prédéterminé de premières étapes, une desdites premières étapes comprenant l'obtention de secondes données par application d'un premier algorithme cryptographique aux premières données, les autres desdites premières étapes comprenant chacune l'obtention d'un résultat par application du premier algorithme cryptographique à la valeur courante et la mémorisation du résultat en tant que nouvelle valeur courante ;

- mise en œuvre du nombre prédéterminé de secondes étapes, une desdites secondes étapes comprenant l'obtention de quatrièmes données par application à des troisièmes données d'un second algorithme cryptographique inverse du premier algorithme cryptographique, les autres desdites secondes étapes comprenant chacune l'obtention d'un autre résultat par application du second algorithme cryptographique à la valeur courante et la mémorisation de l'autre résultat en tant que nouvelle valeur courante ;
- vérification de l'égalité des premières données et des quatrièmes données, et de l'égalité de la valeur courante et de la valeur initiale.

La mise en œuvre effective du premier algorithme cryptographique (respectivement du second algorithme), appliquée aux premières données (respectivement aux troisièmes données), est ainsi noyée dans des exécutions factices de ce premier algorithme cryptographique (respectivement du second algorithme cryptographique), appliquées à la valeur courante.

La mise en œuvre symétrique du premier algorithme cryptographique et de son inverse (second algorithme cryptographique) permet par ailleurs de vérifier l'absence d'erreur (et donc d'attaque) lors du traitement effectif en comparant les premières données et les quatrièmes données.

En outre, du fait que le premier algorithme cryptographique et son inverse (second algorithme cryptographique) sont appliqués un même nombre de fois à la valeur courante, il est possible de vérifier l'absence d'erreur (et donc d'attaque) lors du traitement factice en comparant la valeur initiale et la valeur courante résultant après mise en œuvre des premières étapes et des secondes étapes.

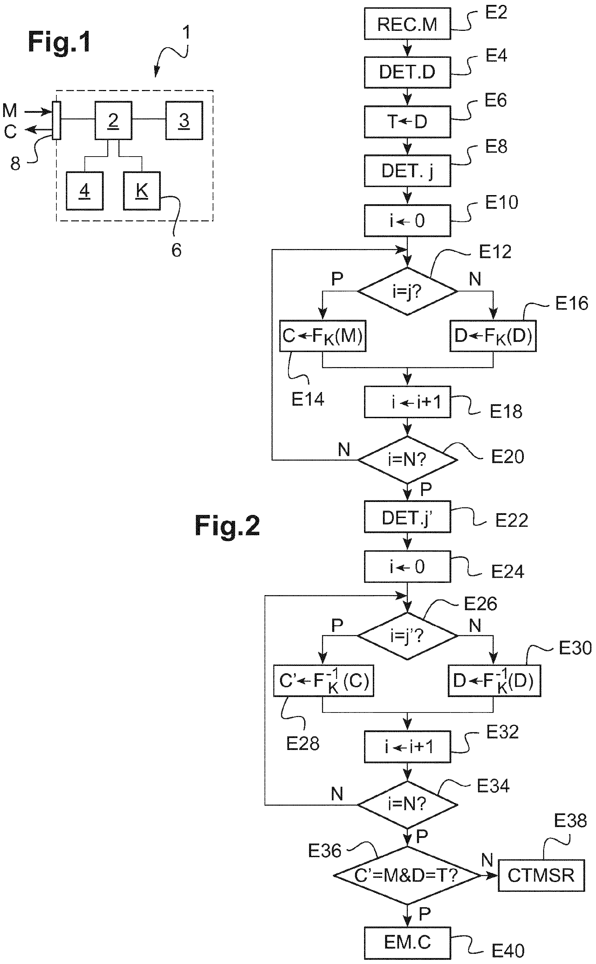

D'autres caractéristiques non limitatives et avantageuses du procédé de traitement cryptographique conforme à l'invention, prises individuellement ou selon toutes les combinaisons techniquement possibles, sont les suivantes :
- le procédé comprend une étape de détermination aléatoire, parmi les premières étapes, de l'étape comprenant l'obtention des secondes données, et/ou une étape de détermination aléatoire, parmi les secondes étapes, de l'étape comprenant l'obtention des quatrièmes données, ce qui permet de noyer encore plus efficacement le traitement effectif au sein du traitement factice (sans toutefois que cela ne soit préjudiciable à l'étape de vérification) ;
- le procédé comprend une étape préalable de détermination aléatoire de la valeur initiale ;
- les premières données représentent un message ou un mot initial (également dénommé "*vecteur d'initialisation*");
- le premier algorithme est un algorithme de chiffrement ;
- le premier algorithme utilise une clé cryptographique ;
- le premier algorithme est un algorithme AES ;
- le procédé comprend, en cas d'égalités entre les premières données et les quatrièmes données et entre la valeur courante et la valeur initiale à l'étape de vérification, une étape d'émission d'une donnée obtenue en fonction des secondes données ;
- le procédé comprend une étape de mise en œuvre d'une action sécuritaire si les premières données diffèrent des quatrièmes données ou si la valeur courante diffère de la valeur initiale à l'étape de vérification ;
- les troisièmes données sont les secondes données, ce qui est le cas lorsque le traitement des premières données comprend seulement l'application du premier algorithme cryptographique (comme dans le cas du premier exemple de réalisation décrit plus loin en référence à la figure 2).

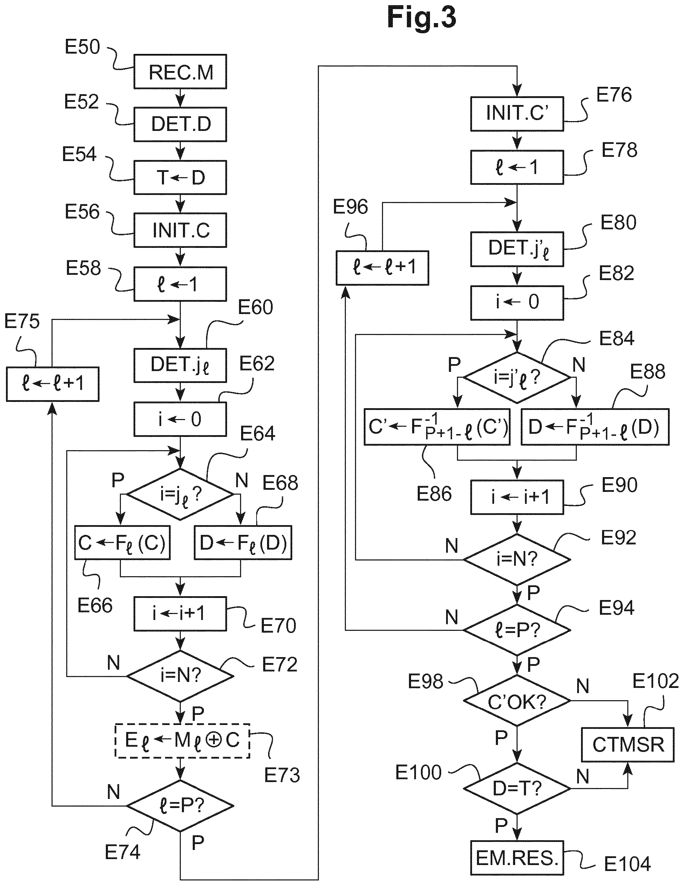

Selon une autre possibilité de réalisation, le procédé peut comprendre en outre les étapes suivantes :
- obtention de cinquièmes données par application d'un troisième algorithme cryptographique aux secondes données ;
- obtention de sixièmes données par application d'un quatrième algorithme cryptographique aux cinquièmes données ;
- obtention de septièmes données par application aux sixièmes données d'un cinquième algorithme cryptographique inverse du quatrième algorithme cryptographique ;
- obtention des troisièmes données par application aux septièmes données d'un sixième algorithme cryptographique inverse du troisième algorithme cryptographique. C'est le cas par exemple lorsque le traitement des premières données consiste à appliquer un algorithme de type "*Triple DES*", comme décrit ci-après en tant que première application envisageable pour le second exemple de réalisation représenté en figure 3.

Selon une autre possibilité encore (qui correspond à la seconde application, décrite plus loin, du second exemple de réalisation), le procédé peut comprendre en outre les étapes suivantes, les secondes données étant utilisées comme données courantes :
- mise en œuvre d'un deuxième nombre prédéterminé de troisièmes étapes comprenant chacune l'obtention d'un résultat par application du premier algorithme cryptographique aux données courantes et la mémorisation du résultat en tant que nouvelles données courantes ;
- mise en œuvre du deuxième nombre prédéterminé de quatrièmes étapes comprenant chacune l'obtention d'un autre résultat par application du second algorithme cryptographique aux données courantes et la mémorisation de l'autre résultat en tant que nouvelles données courantes,
lesdites troisièmes données étant les données courantes après mise en œuvre desdites quatrièmes étapes. Dans ce cas, le traitement des premières données implique plusieurs applications successives du même algorithme cryptographique (le premier algorithme cryptographique), par exemple l'algorithme AES dans le cas d'un chiffrement par bloc (comme décrit plus loin).

L'invention propose également un dispositif de traitement cryptographique de premières données comprenant un processeur programmé pour :
- mémoriser une valeur initiale en tant que valeur courante ;
- mettre en œuvre un nombre prédéterminé de premières étapes, comprenant, lors d'une desdites premières étapes, une application d'un premier algorithme cryptographique aux premières données de manière à obtenir des secondes données, et, lors de chacune des autres desdites premières étapes, une application du premier algorithme cryptographique à la valeur courante de manière à obtenir un résultat et une mémorisation du résultat en tant que nouvelle valeur courante ;
- mettre en œuvre le nombre prédéterminé de secondes étapes, comprenant, lors d'une desdites secondes étapes, une application à des troisièmes données d'un second algorithme cryptographique inverse du premier algorithme cryptographique de manière à obtenir des quatrièmes données, et, lors de chacune des autres desdites secondes étapes, une application du second algorithme cryptographique à la valeur courante de manière à obtenir un autre résultat et une mémorisation de l'autre résultat en tant que nouvelle valeur courante ;
- vérifier l'égalité des premières données et des quatrièmes données, et l'égalité de la valeur courante et de la valeur initiale.

Un tel dispositif peut comprendre par exemple un cryptoprocesseur.

Ce cryptoprocesseur peut alors être conçu pour mettre en œuvre, sur commande du processeur, l'application du premier algorithme cryptographique et/ou l'application du second algorithme cryptographique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un dispositif au sein duquel est mise en œuvre l'invention ;
- la figure 2 représente, sous forme de logigramme, un premier exemple de procédé conforme à l'invention ; et
- la figure 3 représente, sous forme de logigramme, un second exemple de procédé conforme à l'invention.

La figure 1 représente schématiquement les éléments principaux d'un dispositif de traitement cryptographique de données, ici une entité électronique 1, au sein de laquelle est mise en œuvre l'invention. Cette entité électronique est par exemple une carte à microcircuit, par exemple une carte à circuit intégré universelle (ou UICC pour "*Universal Integrated Circuit Card"*)*.* En variante, il pourrait s'agir d'un élément sécurisé (ou SE pour "*Secure Element*") - par exemple un microcontrôleur sécurisé, d'un dispositif électronique portatif (ou *"hand-held electronic device*" selon l'appellation anglo-saxonne) - par exemple un terminal de communication ou un passeport électronique, ou d'un ordinateur.

L'entité électronique 1 comprend un processeur 2 (ici un microprocesseur), une mémoire vive 4 et une mémoire non-volatile réinscriptible 6 (par exemple de type EEPROM pour "*Electrically Erasable and Programmable Read-Only Memory*"). L'entité électronique 1 pourrait éventuellement comprendre en outre une mémoire morte. La mémoire vive 4 et la mémoire non-volatile réinscriptible 6 (ainsi que le cas échéant la mémoire morte) sont chacune liées au processeur 2 de sorte que le processeur 2 peut lire ou écrire des données dans chacune de ces mémoires.

Une de ces mémoires, par exemple la mémoire non-volatile réinscriptible 6, mémorise des instructions de programme d'ordinateur qui permettent la mise en œuvre de l'un au moins des procédés décrits ci-dessous en référence aux figures 2 à 3 lorsque ces instructions sont exécutées par le processeur 2.

Les mémoires 4, 6 stockent également des données représentatives de valeurs utilisées lors de la mise en œuvre des procédés décrits ci-dessous. Par exemple, la mémoire non-volatile réinscriptible 6 mémorise une clé cryptographique K.

La mémoire vive 4 mémorise par ailleurs, par exemple au sein de variables, des données traitées au cours des procédés décrits ci-dessous.

L'entité électronique 1 comprend ici par ailleurs un cryptoprocesseur 3.

Le cryptoprocesseur 3 est conçu pour appliquer un algorithme cryptographique F à des données reçues en entrée du processeur 2 et à émettre en sortie (à destination du processeur 2) le résultat de l'application de cet algorithme cryptographique F.

L'algorithme cryptographique F est par exemple un algorithme de type DES ou un algorithme de type AES. L'algorithme cryptographique F peut être un algorithme de chiffrement, ou un algorithme de déchiffrement, ou un algorithme de signature, ou encore un algorithme de vérification de signature.

En variante, l'entité électronique 1 pourrait toutefois ne pas comprendre un tel cryptoprocesseur, auquel cas le processeur 2 lui-même est conçu pour mettre en œuvre l'algorithme cryptographique F précité. Dans ce cas, la mémoire non-volatile 6 mémorise des instructions conçues pour mettre en œuvre un tel algorithme cryptographique F lorsque ces instructions sont exécutées par le processeur 2.

L'entité électronique 1 comprend en outre une interface de communication 8 avec des dispositifs électroniques externes. Dans le cas décrit ici où l'entité électronique 1 est une carte à microcircuit, l'interface de communication 8 comprend par exemple des contacts affleurant sur une face de la carte à microcircuit. En variante, l'interface de communication 8 pourrait être réalisée par un module de communication sans contact. De manière générale, l'interface de communication 8 peut être un module de communication (filaire ou sans fil) avec une autre entité électronique.

Le processeur 2 peut ainsi recevoir des données, par exemple un message M, en provenance de l'autre entité électronique via l'interface de communication 8 et émettre d'autres données, par exemple un résultat d'application d'un algorithme cryptographique (tel que l'un de ceux décrits ci-dessous en référence aux figures 2 à 3) au message M, à l'autre entité électronique via l'interface de communication 8.

La figure 2 représente, sous forme de logigramme, un premier exemple de procédé conforme à l'invention.

Ce procédé débute à l'étape E2 à laquelle le processeur 2 reçoit, via l'interface de communication 8, le message M à traiter.

Le processeur 2 détermine alors un message factice (ou "*dummy message*" selon l'appellation anglo-saxonne), par exemple par tirage aléatoire (étape E4), et mémorise ce message dans une variable D (par exemple en mémoire vive 4). Le message factice ainsi déterminé et mémorisé dans la variable D a un format identique (par exemple un nombre de bits identique) au message M reçu à l'étape E2.

Le processeur 2 mémorise le message factice déterminé à l'étape E4 (c'est-à-dire l'état initial de la variable D), par exemple dans la mémoire vive 4, ici en tant que variable T (étape E6).

Le processeur 2 détermine alors par tirage aléatoire un nombre entier j compris entre 0 et N-1 (étape E8), où N est un nombre prédéterminé qui représente le nombre d'itérations effectuées pour une application effective de l'algorithme cryptographique F, comme décrit ci-après.

Le processeur 2 initialise ensuite à zéro un compteur i (étape E10), c'est-à-dire une variable i dont la valeur augmente au fur et à mesure des itérations comme décrit ci-après.

Le procédé entre alors dans une boucle à l'étape E12 à laquelle le processeur 2 détermine si la valeur courante du compteur i est égale au nombre entier j (aléatoire) déterminé à l'étape E8.

Dans l'affirmative (flèche P), le processeur 2 commande au cryptoprocesseur 3 l'application au message M de l'algorithme cryptographique F utilisant la clé cryptographique K (étape E14). Le résultat de cette application de l'algorithme cryptographique F au message M est mémorisé, par exemple en mémoire vive 4, ici dans une variable C.

Dans l'exemple décrit ici, la clé cryptographique K est mémorisée dans la mémoire non-volatile 6 ; la clé cryptographique K est par conséquent transmise par le processeur 2 au cryptoprocesseur 3 (avec le message M) pour mise en œuvre de l'étape E14. En variante, la clé cryptographique K pourrait être mémorisée au sein du cryptoprocesseur 3 (le processeur 2 ne transmettant alors au cryptoprocesseur 3 que le message M).

Selon une autre variante déjà mentionnée, le processeur 2 applique lui-même l'algorithme cryptographique F (utilisant la clé cryptographique K) au message M.

Dans la négative à l'étape E12 (flèche N), le processeur 2 commande au cryptoprocesseur 3 l'application de l'algorithme cryptographique F utilisant la clé cryptographique K à la valeur courante de la variable D ; le processeur 2 mémorise le résultat de l'application de l'algorithme cryptographique F à la variable D en tant que nouvelle valeur courante dans cette même variable D avec écrasement (étape E16).

En variante, comme déjà indiqué, le processeur 2 pourrait appliquer lui-même l'algorithme cryptographique F (utilisant la clé cryptographique K) à la valeur courante de la variable D.

Dans les deux cas (étape E14 ou étape E16), le procédé se poursuit à l'étape E18 à laquelle le processeur 2 incrémente le compteur i.

Le processeur 2 détermine alors si le compteur i atteint la valeur (prédéterminée) N (étape E20).

Dans la négative (flèche N), le procédé boucle à l'étape E12 pour mise en œuvre de l'itération suivante.

Dans l'affirmative (flèche P), le procédé se poursuit à l'étape E22 décrite plus bas.

On comprend que, grâce aux étapes qui viennent d'être décrites, sont mises en œuvre une application effective de l'algorithme cryptographique F au message M et N-1 applications de cet algorithme cryptographique F à la variable D. L'itération (parmi les N itérations) correspondant à l'application effective de l'algorithme cryptographique F au message M varie toutefois à chaque mise en œuvre du procédé et de manière aléatoire (grâce au tirage aléatoire de la variable j).

À l'étape E22, le processeur 2 détermine par tirage aléatoire un nombre entier j' compris entre 0 et N-1, où N est le nombre prédéterminé déjà mentionné.

Le processeur 2 initialise ensuite à zéro le compteur i (étape E24).

Le procédé entre alors dans une boucle à l'étape E26 à laquelle le processeur 2 détermine si la valeur courante du compteur i est égale au nombre entier j' (aléatoire) déterminé à l'étape E22.

Dans l'affirmative (flèche P), le processeur 2 commande au cryptoprocesseur 3 l'application à la variable C de l'algorithme F⁻¹ inverse de l'algorithme cryptographique F (étape E28), en utilisant ici la même clé cryptographique K. Le résultat de cette application de l'algorithme inverse F⁻¹ à la variable C est mémorisé, par exemple en mémoire vive 4, ici dans une variable C'.

En fonctionnement normal (c'est-à-dire notamment en l'absence d'attaque par faute), du fait de l'application de l'algorithme cryptographique F au message M avec pour résultat la variable C puis de l'application de l'algorithme inverse F⁻¹ à la variable C pour obtenir la variable C', la variable C' doit être égale au message M (ce qui est vérifié à l'étape E36 décrite plus bas).

En variante, comme déjà indiqué à propos de l'algorithme cryptographique F, le processeur 2 pourrait appliquer lui-même l'algorithme inverse F⁻¹ à la variable C.

Dans la négative à l'étape E26 (flèche N), le processeur 2 commande au cryptoprocesseur 3 l'application de l'algorithme inverse F⁻¹ à la valeur courante de la variable D ; le processeur 2 mémorise le résultat de l'application de l'algorithme inverse F⁻¹ à la variable D en tant que nouvelle valeur courante dans cette même variable D avec écrasement (étape E30).

En variante, comme déjà indiqué, le processeur 2 pourrait appliquer lui-même l'algorithme cryptographique F⁻¹ à la valeur courante de la variable D.

Dans les deux cas (étape E28 ou étape E30), le procédé se poursuit à l'étape E32 à laquelle le processeur 2 incrémente le compteur i.

Le processeur 2 détermine alors si le compteur i atteint la valeur (prédéterminée) N (étape E34).

Dans la négative (flèche N), le procédé boucle à l'étape E26 pour mise en œuvre de l'itération suivante.

Dans l'affirmative (flèche P), le procédé se poursuite à l'étape E36 décrite plus bas.

Ici également sont mises en œuvre une application effective de l'algorithme inverse F⁻¹ à la variable C (afin de retrouver normalement une variable C' identique au message M) et N-1 applications de cet algorithme inverse F⁻¹ à la variable D. L'itération (parmi les N itérations) correspondant à l'application de l'algorithme inverse F⁻¹ à la variable C varie toutefois à chaque mise en œuvre du procédé et de manière aléatoire (grâce au tirage aléatoire de la variable j').

Par ailleurs, la variable D ayant subi N-1 applications de l'algorithme cryptographique F au cours des mises en œuvre de l'étape E16 et N-1 applications de l'algorithme inverse F⁻¹ au cours des mises en œuvre de l'étape E30, la variable D devrait (en fonctionnement normal, c'est-à-dire notamment en l'absence d'attaque par faute) retrouver sa valeur initiale (qui a été sauvegardée dans la variable T à l'étape E6).

Le processeur 2 vérifie ainsi à l'étape E36 d'une part l'égalité entre la variable C' et le message M et d'autre part l'égalité entre la valeur courante de la variable D et la variable T. Cette vérification permet ainsi de s'assurer du fonctionnement normal non seulement au cours des itérations de traitement du message M, mais également au cours des itérations de traitement du message factice D.

Si l'une ou l'autre des deux égalités susmentionnées n'est pas vérifiée, le processeur 2 met en œuvre une étape de traitement d'erreur (étape E38) permettant la mise en œuvre d'au moins une action sécuritaire.

Une telle étape de traitement d'erreur E38 comprend par exemple l'écriture d'une donnée de blocage (ou verrou) dans la mémoire non-volatile réinscriptible 6. La présence d'une donnée de blocage dans la mémoire non-volatile réinscriptible 6 empêchera tout fonctionnement ultérieur de l'entité électronique 1. Pour ce faire, le processeur 2 consulte par exemple la zone de mémorisation potentielle de la donnée de blocage lors du démarrage de son fonctionnement et arrête son fonctionnement en cas de détection de la donnée de blocage.

En variante, l'étape de traitement d'erreur E38 peut inclure l'écriture dans la mémoire non-volatile réinscriptible 6 de données indicatives d'un compteur d'erreurs. Lorsque ce compteur d'erreurs atteint un seuil prédéterminé, le processeur 2 commande par exemple l'écriture en mémoire non-volatile réinscriptible 6 d'une donnée de blocage comme décrite ci-dessus.

L'étape de traitement d'erreur E38 peut éventuellement comprendre en outre l'émission d'un message d'erreur via l'interface de communication 8.

Si les deux égalités susmentionnées sont vérifiées à l'étape E36, le processeur 2 peut commander l'émission (étape E40), via l'interface de communication 8, du contenu de la variable C (qui correspond comme indiqué à l'étape E14 au résultat de l'application de l'algorithme cryptographique F au message M).

La figure 3 représente, sous forme de logigramme, un second exemple de procédé conforme à l'invention.

On décrit ci-dessous ce second exemple dans deux cas d'application envisageables.

Dans une première application de ce second exemple est mis en œuvre un algorithme cryptographique de type "*Triple DES*" : en partant d'un message d'entrée M, on applique successivement trois fonctions cryptographiques DES₁, DES₂, DES₃ (avec ici DES₁ = DES₂⁻¹ = DES₃), ces trois fonctions cryptographiques utilisant respectivement des clés cryptographiques différentes K₁, K₂, K₃.

Dans une seconde application de ce second exemple est mis en œuvre un chiffrement par bloc en mode OFB (pour "*Output FeedBack*"): un message d'entrée M est divisé en P blocs M_{I} et, en partant d'un mot initial IV, on applique successivement P algorithmes cryptographiques (ici de type AES), le résultat du I^{ème} algorithme cryptographique étant appliqué au bloc correspondant M_{I} au moyen d'une addition booléenne (ou opération de ou exclusif, ou encore XOR) en vue du chiffrement de ce bloc M_{I}.

Dans les deux applications, le procédé débute à l'étape E50 par la réception du message M par le processeur 2, ici via l'interface 8.

Le processeur 2 détermine alors un message factice, par exemple par tirage aléatoire (étape E52), et mémorise ce message dans une variable D (par exemple en mémoire vive 4).

Dans la première application, le message factice a une longueur en bits égale à celle du message M. Dans la seconde application, le message factice a une longueur en bits égale à celle de chaque bloc M_{I} du message M.

Le processeur 2 mémorise le message factice déterminé à l'étape E52 (c'est-à-dire l'état initial de la variable D), par exemple dans la mémoire vive 4, ici en tant que variable T (étape E54).

Le processeur 2 initialise alors à l'étape E56 une variable C destinée à subir l'application successive des algorithmes cryptographiques F_{I} dans la suite comme décrit plus bas (ces algorithmes F_{I} étant les algorithmes DES_{I} dans la première application et l'algorithme AES dans la seconde application).

Ainsi, dans la première application, la variable C est initialisée avec le message M reçu à l'étape E50. Dans la seconde application, la variable C est initialisée avec le mot initial IV (généralement désigné "vecteur d'initialisation"). Ce mot initial IV est prédéfini pour le schéma de chiffrement par bloc concerné et peut donc être mémorisé par exemple dans la mémoire non-volatile 6 (de même que la clé cryptographique K utilisée lors de l'application de l'algorithme cryptographique de type AES comme expliqué plus bas). En variante, le mot initial IV peut être reçu (éventuellement avec le message M, c'est-à-dire à l'étape E50) via l'interface de communication 8.

Le processeur 2 initialise ensuite à la valeur 1 une variable d'indice I (étape E58).

Le processeur 2 détermine alors par tirage aléatoire un nombre entier j_{I} compris entre 0 et N-1 (étape E60). Comme dans le premier exemple décrit en référence à la figure 2, le nombre N est prédéfini. Pour un algorithme cryptographique F_{I} donné, ce nombre N représente le nombre total d'applications de cet algorithme cryptographique F_{I} pour une application effective de cet algorithme F_{I} à la donnée à traiter (variable C).

Le processeur 2 initialise ensuite à zéro un compteur i (étape E62), c'est-à-dire une variable i dont la valeur augmente au fur et à mesure des itérations comme décrit ci-après.

Le processeur 2 détermine à l'étape E64 si la valeur courante du compteur i est égale au nombre entier j_{I} (aléatoire) déterminé à l'étape E60.

Dans l'affirmative (flèche P), le processeur 2 commande au cryptoprocesseur 3 l'application à la variable C de l'algorithme cryptographique F_{I} (étape E66). Le processeur 2 mémorise le résultat de cette application de l'algorithme cryptographique F_{I} à la variable C dans la variable C elle-même, avec écrasement.

Comme pour le premier exemple, on peut prévoir en variante que le processeur 2 applique lui-même l'algorithme cryptographique F_{I}.

Dans la première application envisagée, l'algorithme F_{I} est l'algorithme DES_{I} mentionné plus haut (I pouvant varier entre 1 et 3 dans cette première application) utilisant la clé cryptographique K_{I} (cette clé cryptographique K_{I} pouvant être par exemple mémorisée dans la mémoire non-volatile 6).

Dans la seconde application envisagée, l'algorithme cryptographique F_{I} est l'algorithme AES utilisant la clé cryptographique K (mémorisée ici en mémoire non-volatile 6). Ainsi, dans cette seconde application, l'algorithme cryptographique F_{I} est le même quel que soit l'indice I concerné.

Dans la négative à l'étape E64 (flèche N), le processeur 2 commande au cryptoprocesseur 3 l'application de l'algorithme cryptographique F_{I} à la valeur courante de la variable D ; le processeur 2 mémorise le résultat de l'application de l'algorithme cryptographique F_{I} à la variable D en tant que nouvelle valeur courante dans cette même variable D avec écrasement (étape E68).

En variante, comme déjà indiqué, le processeur 2 pourrait appliquer lui-même l'algorithme cryptographique F_{I} à la valeur courante de la variable D.

Dans les deux cas (étape E66 ou étape E68), le procédé se poursuit à l'étape E70 à laquelle le processeur 2 incrémente le compteur i.

Le processeur 2 détermine alors si le compteur i atteint la valeur (prédéterminée) N (étape E72).

Dans la négative (flèche N), le procédé boucle à l'étape E64 pour mise en œuvre de l'itération suivante.

Dans l'affirmative (flèche P), les N mises en œuvre de l'algorithme cryptographique F_{I} ont été réalisées (une seule étant effective, les autres étant factices).

Dans le cas de la seconde application, le processeur 2 met alors en œuvre une opération de ou exclusif (ou XOR) entre la valeur courante de la variable C (qui mémorise le résultat de la dernière application effective de l'algorithme cryptographique F_{I}, ici l'algorithme AES) et du bloc courant M_{I} du message M, ce qui permet d'obtenir le bloc chiffré courant E_{I} (E_{I} = M_{I} ⊕ C).

Le processeur 2 détermine alors si la variable d'indice I correspond au dernier indice (de valeur P) à traiter (étape E74). Dans la première application envisagée, la valeur prédéterminée P vaut 3 (correspondant aux 3 algorithmes cryptographiques DES₁, DES₂, DES₃ successivement appliqués). Dans la seconde application envisagée, la valeur P correspond au nombre de blocs M_{I} formant le message M, comme déjà indiqué.

Dans la négative à l'étape E74 (flèche N), la variable d'indice I est incrémentée à l'étape E75 et le procédé boucle à l'étape E60 déjà décrite.

Dans l'affirmative à l'étape E74 (flèche P), tous les algorithmes cryptographiques F_{I} ont été appliqués à la variable C et le procédé se poursuit à l'étape E76 décrite à présent pour débuter une phase de traitement permettant de vérifier le bon fonctionnement au cours des étapes précédentes.

À l'étape E76, le processeur 2 initialise une variable C' (à laquelle seront appliqués successivement P algorithmes cryptographique F_{P+1-I}⁻¹ respectivement inverses des algorithmes cryptographiques F_{P+1-I}).

Dans les deux applications décrites ici, on cherche à retrouver (après application de ces P algorithmes inverses F_{P+1-I}⁻¹) l'état initial de la variable C afin de vérifier l'absence d'erreur (et donc d'attaque) dans le traitement. Le processeur 2 initialise donc (dans les deux applications) la variable C' avec la valeur courante de la variable C.

Le processeur 2 initialise ensuite à la valeur 1 une variable d'indice I (étape E78).

Le processeur 2 détermine alors par tirage aléatoire un nombre entier j'_{I} compris entre 0 et N-1 (étape E80).

Le processeur 2 initialise ensuite à zéro le compteur i (étape E82).

Le processeur 2 détermine à l'étape E84 si la valeur courante du compteur i est égale au nombre entier j'_{I} (aléatoire) déterminé à l'étape E80.

Dans l'affirmative (flèche P), le processeur 2 commande au cryptoprocesseur 3 l'application à la variable C' de l'algorithme cryptographique F_{P+1-I}⁻¹ (étape E86). Le processeur 2 mémorise le résultat de cette application de l'algorithme cryptographique F_{P+1-I}⁻¹ à la variable C' dans la variable C' elle-même, avec écrasement.

Comme pour le premier exemple, on peut prévoir en variante que le processeur 2 applique lui-même l'algorithme inverse F_{P+1-I}⁻¹.

Dans la première application envisagée, l'algorithme F_{P+1-I}⁻¹ est l'algorithme inverse de l'algorithme DES_{P+1-I} mentionné plus haut (I pouvant varier entre 1 et 3 dans cette première application) utilisant la clé cryptographique K_{P+1-I}.

Dans la seconde application envisagée, l'algorithme F_{P+1-I}⁻¹ est l'algorithme inverse de l'algorithme AES utilisant la clé cryptographique K.

Dans la négative à l'étape E84 (flèche N), le processeur 2 commande au cryptoprocesseur 3 l'application de l'algorithme cryptographique F_{P+1-I}⁻¹ à la valeur courante de la variable D ; le processeur 2 mémorise le résultat de l'application de l'algorithme cryptographique F_{P+1-I}⁻¹ à la variable D en tant que nouvelle valeur courante dans cette même variable D avec écrasement (étape E88).

En variante, comme déjà indiqué, le processeur 2 pourrait appliquer lui-même l'algorithme cryptographique F_{P+1-I}⁻¹ à la valeur courante de la variable D.

Dans les deux cas (étape E86 ou étape E88), le procédé se poursuit à l'étape E90 à laquelle le processeur 2 incrémente le compteur i.

Le processeur 2 détermine alors si le compteur i atteint la valeur (prédéterminée) N (étape E92).

Dans la négative (flèche N), le procédé boucle à l'étape E84 pour mise en œuvre de l'itération suivante.

Dans l'affirmative (flèche P), les N mises en œuvre de l'algorithme inverse ont été réalisées (une seule étant effective, les autres étant factices).

Le processeur 2 détermine alors si la variable d'indice I correspond au dernier indice (de valeur P) à traiter (étape E94).

Dans la négative à l'étape E94 (flèche N), la variable d'indice I est incrémentée à l'étape E96 et le procédé boucle à l'étape E80 déjà décrite.

Dans l'affirmative à l'étape E94 (flèche P), tous les algorithmes cryptographiques inverses F_{P+1-I}⁻¹ ont été appliqués à la variable C' et le procédé se poursuit à l'étape E98 décrite à présent.

Le processeur 2 vérifie à l'étape E98 si la variable C' vaut la valeur attendue en fonctionnement normal, c'est-à-dire si, en appliquant successivement les algorithmes inverses F_{P+1-I}⁻¹ (aux passages successifs à l'étape E86), on retrouve la valeur d'initialisation de la variable C à l'étape E56.

Ainsi, dans la première application, le processeur 2 vérifie à l'étape E98 si le contenu de la variable C' est identique au message reçu M.

Dans la seconde application, le processeur 2 vérifie à l'étape E98 si le contenu de la variable C'est identique au mot initial IV.

En cas de vérification négative à l'étape E98 (ce qui se produit en cas d'erreur de traitement au cours du procédé, dont l'origine peut être une attaque), le processeur met en œuvre une étape de traitement d'erreur (étape E102) permettant la mise en œuvre d'au moins une action sécuritaire. Cette étape de traitement d'erreur est identique à l'étape E38 décrite ci-dessus en référence à la figure 2 et ne sera donc pas décrite à nouveau.

En cas de vérification positive à l'étape E98, le processeur 2 vérifie à l'étape E100 l'égalité entre le contenu de la variable D et le contenu de la variable T. En effet, la variable D (dont la valeur initiale a été sauvegardée dans la variable T) a subi (N-1) applications de chacun des algorithmes cryptographiques F_{I}, puis (N-1) applications de chacun des algorithmes inverses (pris dans l'ordre inverse), de sorte que la variable D retrouve son état initial en fonctionnement normal.

En cas de vérification négative à l'étape E100 (ce qui se produit en cas d'erreur de traitement au cours du procédé, dont l'origine peut être une attaque), le processeur met en œuvre l'étape E102 de traitement d'erreur déjà mentionnée.

En cas de vérification positive à l'étape E100, le bon fonctionnement a été vérifié au cours des étapes d'application effective des algorithmes (à l'étape E98) et au cours des étapes d'application factice des algorithmes (à l'étape E100) ; le processeur 2 peut alors commander l'émission via l'interface 8 du résultat du traitement décrit ci-dessus (étape E104).

Dans la première application, ce résultat est le contenu de la variable C.

Dans la seconde application, ce résultat est le message chiffré formé de l'ensemble des blocs chiffrés E_{I} (obtenus respectivement lors des passages successifs à l'étape E73).

## Revendications

1. Procédé de traitement cryptographique de premières données (M ; C), comprenant les étapes suivantes :
- mémorisation d'une valeur initiale en tant que valeur courante (D) ;
- mise en œuvre d'un nombre prédéterminé (N) de premières étapes (E14, E16 ; E66, E68), une (E14 ; E66) desdites premières étapes comprenant l'obtention de secondes données (C) par application d'un premier algorithme cryptographique (F_{K} ; F_{I}) aux premières données (M ; C), les autres (E16 ; E68) desdites premières étapes comprenant chacune l'obtention d'un résultat par application du premier algorithme cryptographique (F_{K} ; F_{I}) à la valeur courante (D) et la mémorisation du résultat en tant que nouvelle valeur courante (D) ;
- mise en œuvre du nombre prédéterminé (N) de secondes étapes (E28, E30 ; E86, E88), une (E28 ; E86) desdites secondes étapes comprenant l'obtention de quatrièmes données (C') par application à des troisièmes données (C ; C') d'un second algorithme cryptographique (F_{K}⁻¹ ; F_{P+1-I}⁻¹) inverse du premier algorithme cryptographique (F_{K} ; F_{I}), les autres (E30 ; E88) desdites secondes étapes comprenant chacune l'obtention d'un autre résultat par application du second algorithme cryptographique (F_{K}⁻¹ ; F_{P+1-I}⁻¹) à la valeur courante (D) et la mémorisation de l'autre résultat en tant que nouvelle valeur courante (D) ;
- vérification (E36 ; E98, E100) de l'égalité des premières données (M ; C) et des quatrièmes données (C'), et de l'égalité de la valeur courante (D) et de la valeur initiale,
dans lequel les troisièmes données sont les secondes données,
ou dans lequel le procédé comprend en outre les étapes suivantes :
- obtention de cinquièmes données par application d'un troisième algorithme cryptographique aux secondes données ;
- obtention de sixièmes données par application d'un quatrième algorithme cryptographique aux cinquièmes données ;
- obtention de septièmes données par application aux sixièmes données d'un cinquième algorithme cryptographique inverse du quatrième algorithme cryptographique ;
- obtention des troisièmes données par application aux septièmes données d'un sixième algorithme cryptographique inverse du troisième algorithme cryptographique,
ou dans lequel le procédé comprend les étapes suivantes, les secondes données étant utilisées comme données courantes :
- mise en œuvre d'un deuxième nombre prédéterminé (P) de troisièmes étapes comprenant chacune l'obtention d'un résultat par application du premier algorithme cryptographique aux données courantes et la mémorisation du résultat en tant que nouvelles données courantes ;
- mise en œuvre du deuxième nombre prédéterminé (P) de quatrièmes étapes comprenant chacune l'obtention d'un autre résultat par application du second algorithme cryptographique aux données courantes et la mémorisation de l'autre résultat en tant que nouvelles données courantes,
lesdites troisièmes données étant les données courantes après mise en œuvre desdites quatrièmes étapes.

2. Procédé selon la revendication 1, comprenant une étape de détermination aléatoire (E8, E12; E60, E64), parmi les premières étapes, de l'étape comprenant l'obtention des secondes données.

3. Procédé selon la revendication 1 ou 2, comprenant une étape de détermination aléatoire (E22, E26 ; E80, E84), parmi les secondes étapes, de l'étape comprenant l'obtention des quatrièmes données.

4. Procédé selon l'une des revendications 1 à 3, comprenant une étape préalable de détermination aléatoire (E4 ; E52) de la valeur initiale.

5. Procédé selon l'une des revendications 1 à 4, dans lequel les premières données représentent un message (M) ou un mot initial.

6. Procédé selon l'une des revendications 1 à 5, dans lequel le premier algorithme est un algorithme de chiffrement.

7. Procédé selon l'une des revendications 1 à 6, dans lequel le premier algorithme utilise une clé cryptographique (K).

8. Procédé selon la revendication 7, dans lequel le premier algorithme est un algorithme AES.

9. Procédé selon l'une des revendications 1 à 8, comprenant, en cas d'égalités entre les premières données (M ; C) et les quatrièmes données (C') et entre la valeur courante (D) et la valeur initiale à l'étape de vérification (E36 ; E98, E100), une étape d'émission (E40; E104) d'une donnée (C ; E_{I}) obtenue en fonction des secondes données.

10. Procédé selon l'une des revendications 1 à 9, comprenant une étape de mise en œuvre d'une action sécuritaire (E38 ; E102) si les premières données diffèrent des quatrièmes données ou si la valeur courante diffère de la valeur initiale à l'étape de vérification (E36 ; E98, E100).

11. Dispositif (1) de traitement cryptographique de premières données (M ; C) comprenant un processeur (2) programmé pour :
- mémoriser une valeur initiale en tant que valeur courante (D) ;
- mettre en œuvre un nombre prédéterminé (N) de premières étapes, comprenant, lors d'une desdites premières étapes, une application d'un premier algorithme cryptographique (F_{K} ; F_{I}) aux premières données (M ; C) de manière à obtenir des secondes données (C), et, lors de chacune des autres desdites premières étapes, une application du premier algorithme cryptographique (F_{K} ; F_{I}) à la valeur courante (D) de manière à obtenir un résultat et une mémorisation du résultat en tant que nouvelle valeur courante (D) ;
- mettre en œuvre le nombre prédéterminé (N) de secondes étapes, comprenant, lors d'une desdites secondes étapes, une application à des troisièmes données (C ; C') d'un second algorithme cryptographique (F_{K}⁻¹ ; F_{P+1-I}⁻¹) inverse du premier algorithme cryptographique (F_{K} ; F_{I}) de manière à obtenir des quatrièmes données (C'), et, lors de chacune des autres desdites secondes étapes, une application du second algorithme cryptographique (F_{K}⁻¹ ; F_{P+1-I}⁻¹) à la valeur courante (D) de manière à obtenir un autre résultat et une mémorisation de l'autre résultat en tant que nouvelle valeur courante (D) ;
- vérifier l'égalité des premières données (M ; C) et des quatrièmes données (C'), et l'égalité de la valeur courante (D) et de la valeur initiale
dans lequel les troisièmes données sont les secondes données,
ou dans lequel le processeur est programmé pour mettre en œuvre les étapes suivantes :
- obtention de cinquièmes données par application d'un troisième algorithme cryptographique aux secondes données ;
- obtention de sixièmes données par application d'un quatrième algorithme cryptographique aux cinquièmes données ;
- obtention de septièmes données par application aux sixièmes données d'un cinquième algorithme cryptographique inverse du quatrième algorithme cryptographique ;
- obtention des troisièmes données par application aux septièmes données d'un sixième algorithme cryptographique inverse du troisième algorithme cryptographique,
ou dans lequel le processeur est programmé pour mettre en œuvre les étapes suivantes, les secondes données étant utilisées comme données courantes :
- mise en œuvre d'un deuxième nombre prédéterminé (P) de troisièmes étapes comprenant chacune l'obtention d'un résultat par application du premier algorithme cryptographique aux données courantes et la mémorisation du résultat en tant que nouvelles données courantes ;
- mise en œuvre du deuxième nombre prédéterminé (P) de quatrièmes étapes comprenant chacune l'obtention d'un autre résultat par application du second algorithme cryptographique aux données courantes et la mémorisation de l'autre résultat en tant que nouvelles données courantes,
lesdites troisièmes données étant les données courantes après mise en œuvre desdites quatrièmes étapes.

12. Dispositif selon la revendication 11, comprenant un cryptoprocesseur (3) conçu pour mettre en œuvre, sur commande du processeur (2), l'application du premier algorithme cryptographique (F_{K} ; F_{I}) et l'application du second algorithme cryptographique (F_{K}⁻¹ ; F_{P+1-I}⁻¹).

## Patentansprüche

1. Verfahren zur kryptographischen Verarbeitung erster Daten (M; C) mit den folgenden Schritten:
- Einspeichern eines Anfangswerts als laufenden Wert (D);
- Ausführen einer vorbestimmten Anzahl (N) erster Schritte (E14, E16; E66, E68), wobei einer (E14; E66) der ersten Schritte das Erhalten zweiter Daten (C) durch Anwendung eines ersten kryptografischen Algorithmus (F_{K}; F_{I}) auf die ersten Daten (M; C) aufweist, wobei die anderen (E18; E68) der ersten Schritte jeweils das Erhalten eines Resultats durch Anwenden des ersten kryptografischen Algorithmus (F_{K} ; F_{I}) auf den laufenden Wert (D) und das Speichern des Resultats als neuen laufenden Wert (D) aufweisen;
- Ausführen der vorbestimmten Anzahl (N) zweiter Schritte (E28, E30; E86, E88), wobei einer (E28; E86) der zweiten Schritte das Erhalten von vierten Daten (C') durch Anwenden eines zum ersten kryptografischen Algorithmus (F_{K} ; F_{I}) inversen zweiten kryptografischen Algorithmus (F_{K}⁻¹ ; F_{P+1-I}⁻¹) auf dritte Daten (C; C') aufweist, wobei die anderen (E30; E88) der zweiten Schritte jeweils das Erhalten eines anderen Resultats durch Anwenden des zweiten kryptografischen Algorithmus (F_{K} ; F_{P+1-I}⁻¹) auf den laufenden Wert (D) und das Speichern des anderen Resultats als neuen laufenden Wert (D) aufweisen;
- Überprüfen (E36; E98, E100) der Gleichheit der ersten Daten (M; C) und der vierten Daten (C') und der Gleichheit des laufenden Werts (D) und des Anfangswerts,
wobei die dritten Daten die zweiten Daten sind,
oder wobei das Verfahren außerdem die folgenden Schritte aufweist:
- Erhalten von fünften Daten durch Anwenden eines dritten kryptografischen Algorithmus auf die zweiten Daten,
- Erhalten von sechsten Daten durch Anwenden eines vierten kryptografischen Algorithmus auf die fünften Daten,
- Erhalten von siebenten Daten durch Anwenden eines zum vierten kryptografischen Algorithmus inversen fünften kryptografischen Algorithmus auf die sechsten Daten,
- Erhalten der dritten Daten durch Anwenden eines zum dritten kryptografischen Algorithmus inversen sechsten kryptografischen Algorithmus auf die siebenten Daten,
oder wobei das Verfahren die folgenden Schritte aufweist, wobei die zweiten Daten als laufende Daten verwendet werden:
- Ausführen einer zweiten vorbestimmten Anzahl (P) dritter Schritte, wobei jeder das Erhalten eines Resultats durch Anwenden des ersten kryptografischen Algorithmus auf die laufenden Daten und das Speichern des Resultats als neue laufende Daten aufweist,
- Ausführen der zweiten vorbestimmten Anzahl (P) vierter Schritte, wobei jeder das Erhalten eines anderen Resultats durch Anwenden des zweiten kryptografischen Algorithmus auf die laufenden Daten und das Speichern des anderen Resultats als neue laufende Daten aufweist,
wobei die dritten Daten die laufenden Werte nach Ausführung der vierten Schritte sind.

2. Verfahren gemäß Anspruch 1, das einen Schritt des zufälligen Bestimmens (E22, E26; E80, E84) unter den ersten Schritten, welcher Schritt das Erhalten der zweiten Daten aufweist.

3. Verfahren gemäß Anspruch 1 oder 2, das einen Schritt des zufälligen Bestimmens (E22, E26; E80, E84) unter den zweiten Schritten, welcher Schritt das Erhalten der vierten Daten aufweist.

4. Verfahren gemäß einem der Ansprüche 1 bis 3, das einen vorangehenden Schritt des zufälligen Bestimmens (E4; E52) des Anfangswerts aufweist.

5. Verfahren gemäß einem der Ansprüche 1 bis 4, bei dem die ersten Daten eine Nachricht (M) oder ein Ausgangswort darstellen.

6. Verfahren gemäß einem der Ansprüche 1 bis 5, bei dem der erste Algorithmus ein Chiffrieralgorithmus ist.

7. Verfahren gemäß einem der Ansprüche 1 bis 6, bei dem der erste Algorithmus einen kryptografischen Schlüssel (K) verwendet.

8. Verfahren gemäß Anspruch 7, bei dem der erste Algorithmus ein AES-Algorithmus ist.

9. Verfahren gemäß einem der Ansprüche 1 bis 8, das im Falle der Gleichheiten zwischen den ersten Daten (M; C) und den vierten Daten (C') und zwischen dem laufenden Wert (D) und dem Anfangswert im Überprüfungsschritt (E36; E98, E100) einen Schritt des Ausgebens (E40; E104) eines in Abhängigkeit von den zweiten Daten erhaltenen Datums (C; E_{I}) aufweist.

10. Verfahren gemäß einem der Ansprüche 1 bis 9, das einen Schritt des Ausführens einer Sicherungsmaßnahme (E38; E102) aufweist, wenn die ersten Daten von den vierten Daten abweichen oder wenn der laufende Wert vom Anfangswert im Überprüfungsschritt (E36; E98, E100) abweicht.

11. Vorrichtung (1) zur kryptographischen Verarbeitung erster Daten (M; C), die einen Prozessor (2) aufweist, der für:
- Einspeichern eines Anfangswerts als laufenden Wert (D);
- Ausführen einer vorbestimmten Anzahl (N) erster Schritte, das bei einem der ersten Schritte ein Anwenden eines ersten kryptografischen Algorithmus (F_{K}; F_{I}) auf die ersten Daten (M; C), um zweite Daten (C) zu erhalten, und bei jedem der anderen ersten Schritte ein Anwenden des ersten kryptografischen Algorithmus (F_{K} ; F_{I}) auf den laufenden Wert (D), um ein Resultat zu erhalten, und ein Speichern des Resultats als neuen laufenden Wert (D) aufweist;
- Ausführen der vorbestimmten Anzahl (N) zweiter Schritte, das bei einem der zweiten Schritte ein Anwenden eines zum ersten kryptografischen Algorithmus (F_{K} ; F_{I}) inversen zweiten kryptografischen Algorithmus (F_{K}⁻¹ ; F_{P+1-I}⁻¹) auf dritte Daten (C; C'), um vierte Daten zu erhalten, und das bei jedem der anderen zweiten Schritte ein Anwenden des zweiten kryptografischen Algorithmus (F_{K}⁻¹ ; F_{P+1-I}⁻¹) auf den laufenden Wert (D) aufweist, um ein anderes Resultat und ein Speichern des Resultats als neuen laufenden Wert (D) zu erhalten, aufweist;
- Überprüfen der Gleichheit der ersten Daten (M; C) und der vierten Daten (C') und der Gleichheit des laufenden Werts (D) und des Anfangswerts, programmiert ist,
wobei die dritten Daten die zweiten Daten sind,
oder wobei der Prozessor dafür programmiert ist, die folgenden Schritte auszuführen:
- Erhalten von fünften Daten durch Anwenden eines dritten kryptografischen Algorithmus auf die zweiten Daten,
- Erhalten von sechsten Daten durch Anwenden eines vierten kryptografischen Algorithmus auf die fünften Daten,
- Erhalten von siebenten Daten durch Anwenden eines zum vierten kryptografischen Algorithmus inversen fünften kryptografischen Algorithmus auf die sechsten Daten,
- Erhalten der dritten Daten durch Anwenden eines zum dritten kryptografischen Algorithmus inversen sechsten kryptografischen Algorithmus auf die siebenten Daten,
oder wobei der Prozessor dafür programmiert ist, die folgenden Schritte auszuführen, wobei die zweiten Daten als laufende Daten verwendet werden:
- Ausführen einer zweiten vorbestimmten Anzahl (P) dritter Schritte, wobei jeder das Erhalten eines Resultats durch Anwenden des ersten kryptografischen Algorithmus auf die laufenden Daten (D) und das Speichern des Resultats als neue laufende Daten aufweist,
- Ausführen der zweiten vorbestimmten Anzahl (P) vierter Schritte, wobei jeder das Erhalten eines anderen Resultats durch Anwenden des zweiten kryptografischen Algorithmus auf die laufenden Daten und das Speichern des anderen Resultats als neue laufende Werte aufweist,
wobei die dritten Daten die laufenden Daten nach Ausführung der vierten Schritte sind.

12. Vorrichtung gemäß Anspruch 11 mit einem Kryptoprozessor (3), der dazu ausgelegt ist, auf Befehl des Prozessors (2) die Anwendung des ersten kryptografischen Algorithmus (F_{K} ; F_{I}) und die Anwendung des zweiten kryptografischen Algorithmus (F_{K}⁻¹ ; F_{P+1-I}⁻¹) auszuführen.

## Claims

1. Method for cryptographic processing of first data (M; C), comprising the following steps:
- storage of an initial value as a current value (D);
- implementation of a predetermined number (N) of first steps (E14, E16; E66, E68), one (E14; E66) of said first steps involving the obtaining of second data (C) by applying a first cryptographic algorithm (F_{K}; F_{I}) to the first data (M; C), the other ones (E16; E68) of said first steps each involving the obtaining of a result by applying the first cryptographic algorithm (F_{K}; F_{I}) to the current value (D) and the storage of the result as the new current value (D);
- implementation of the predetermined number (N) of second steps (E28, E30; E86, E88), one (E28; E86) of said second steps involving the obtaining of fourth data (C') by applying, to third data (C; C'), a second cryptographic algorithm (F_{K}⁻¹; F_{P+1-I}⁻¹) that is the inverse of the first cryptographic algorithm (F_{K}; F_{I}), the other ones (E30; E88) of said second steps each involving the obtaining of another result by applying the second cryptographic algorithm (F_{K}⁻¹; F_{P+1-I}⁻¹) to the current value (D) and the storage of the other result as the new current value (D);
- verification (E36; E98, E100) of the equality of the first data (M; C) and the fourth data (C'), and of the equality of the current value (D) and the initial value,
wherein the third data is the second data,
or wherein the method further comprises the following steps:
- obtaining fifth data by applying a third cryptographic algorithm to the second data;
- obtaining sixth data by applying a fourth cryptographic algorithm to the fifth data;
- obtaining seventh data by applying, to the sixth data, a fifth cryptographic algorithm that is the inverse of the fourth cryptographic algorithm;
- obtaining the third data by applying, to the seventh data, a sixth cryptographic algorithm that is the inverse of the third cryptographic algorithm,
or wherein the method comprises the following steps, the second data being used as current data:
- implementation of a second predetermined number (P) of third steps each involving the obtaining of a result by applying the first cryptographic algorithm to the current data and the storage of the result as the new current data;
- implementation of the second predetermined number (P) of fourth steps each involving the obtaining of another result by applying the second cryptographic algorithm to the current data and the storage of the other result as the new current data,
said third data being the current data after implementation of said fourth steps.

2. Method according to claim 1, comprising a step of randomly determining (E8, E12; E60, E64), among the first steps, the step involving the obtaining of the second data.

3. Method according to claim 1 or 2, comprising a step of randomly determining (E22, E26; E80, E84), among the second steps, the step involving the obtaining of the fourth data.

4. Method according to one of claims 1 to 3, comprising a preliminary step of randomly determining (E4; E52) the initial value.

5. Method according to one of claims 1 to 4, wherein the first data represents a message (M) or an initial word.

6. Method according to one of claims 1 to 5, wherein the first algorithm is an encryption algorithm.

7. Method according to one of claims 1 to 6, wherein the first algorithm uses a cryptographic key (K).

8. Method according to claim 7, wherein the first algorithm is an AES algorithm.

9. Method according to one of claims 1 to 8, comprising, in the case of equalities between the first data (M; C) and the fourth data (C') and between the current value (D) and the initial value during the verification step (E36; E98, E100), a step of emitting (E40; E104) a piece of data (C; E_{I}) obtained depending on the second data.

10. Method according to one of claims 1 to 9, comprising a step of implementing a security action (E38; E102) if the first data differs from the fourth data or if the current value differs from the initial value during the verification step (E36; E98, E100).

11. Device (1) for cryptographic processing of first data (M; C) comprising a processor (2) programmed to:
- store an initial value as a current value (D);
- implement a predetermined number (N) of first steps, involving, during one of said first steps, an application of a first cryptographic algorithm (F_{K}; F_{I}) to the first data (M; C) in such a way as to obtain second data (C), and, during each of the other ones of said first steps, the application of the first cryptographic algorithm (F_{K}; F_{I}) to the current value (D) in such a way as to obtain a result and a storage of the result as the new current value (D);
- implement the predetermined number (N) of second steps, involving, during one of said second steps, an application, to third data (C; C'), of a second cryptographic algorithm (F_{K}⁻¹; F_{P+1-I}⁻¹) that is the inverse of the first cryptographic algorithm (F_{K}; F_{I}) in such a way as to obtain fourth data (C'), and, during each of the other ones of said second steps, an application of the second cryptographic algorithm (F_{K}⁻¹; F_{P+1-I}⁻¹) to the current value (D) in such a way as to obtain another result and a storage of the other result as the new current value (D);
- verify the equality of the first data (M; C) and the fourth data (C'), and the equality of the current value (D) and the initial value
wherein the third data is the second data,
or wherein the processor is programmed to implement the following steps:
- obtaining fifth data by applying a third cryptographic algorithm to the second data;
- obtaining sixth data by applying a fourth cryptographic algorithm to the fifth data;
- obtaining seventh data by applying, to the sixth data, a fifth cryptographic algorithm that is the inverse of the fourth cryptographic algorithm;
- obtaining the third data by applying, to the seventh data, a sixth cryptographic algorithm that is the inverse of the third cryptographic algorithm,
or wherein processor is programmed to implement the following steps, the second data being used as current data:
- implementation of a second predetermined number (P) of third steps each involving the obtaining of a result by applying the first cryptographic algorithm to the current data and the storage of the result as the new current data;
- implementation of the second predetermined number (P) of fourth steps each involving the obtaining of another result by applying the second cryptographic algorithm to the current data and the storage of the other result as the new current data,
said third data being the current data after implementation of said fourth steps.

12. Device according to claim 11, comprising a cryptoprocessor (3) designed to implement, upon command by the processor (2), the application of the first cryptographic algorithm (F_{K}; F_{I}) and the application of the second cryptographic algorithm (F_{K}⁻¹; F_{P+1-I}⁻¹).
